(19)

Europäisches
Patentamt
European
Patent Office
Office européen
des brevets

(11) **EP 2 083 364 A1**

(12) **EUROPEAN PATENT APPLICATION**

(43) Date of publication:
**29.07.2009 Bulletin 2009/31**

(51) Int Cl.:
*G06F 17/30* (2006.01)

(21) Application number: **09000986.1**

(22) Date of filing: **24.01.2009**

<table>
<tr><td>

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.01.2008 EP 08001441**
**31.01.2008 EP 08001817**

</td><td>

(71) Applicant: **DEVONtechnologies, LLC**
**Coeur d'Alene ID 83814 (US)**

(72) Inventor: **Grunenberg, Christian**
**37371 Hlincova Hora-Kodetka (CZ)**

(74) Representative: **KEIL & SCHAAFHAUSEN**
**Patentanwälte**
**Cronstettenstraße 66**
**60322 Frankfurt am Main (DE)**

</td></tr>
</table>

(54) **Method for retrieving a document, a computer-readable medium, a computer program product, and a system that facilitates retrieving a document**

(57)     The invention comprises a method for retrieving at least one second document contained in a document repository that is contextually similar to a given first document of said repository, wherein said repository is associated with an index of all meta data of all documents of the repository. In order to get good results in the retrieval of contextually similar documents with high speed the method of the present invention:

selects the associated reference meta data of said first document in said index, and

determines the respective weight value (Wword) of each element, preferably of each word, of said reference meta data. Additionally, the above method

determines a first threshold for the weight values of the elements of said reference meta data, and

selects the at least one element of said reference meta data, whose respective weight value is above said first threshold, and

assigns the respective weight value of each selected meta data element to the at least one document associated with the respective selected meta data element and determining the total weight of each document of the repository by summing up said assigned weight values for each document. Furthermore, the method of the present invention

normalizes the total weight value of each document of said repository, and

selects a predefined number of m documents with the highest normalized total weight values, preferably with a normalized total weight value above a second threshold, as said at least one second document.

Fig. 3

**Description**

**Technical Field**

The present invention relates to a method for retrieving at least one second document contained in a document repository that is contextually similar to a given first document of that repository. The invention further relates to a computer-readable medium, a computer program product, and a system that facilitates retrieving at least one second document contained in a document repository that is contextually similar to a given first document of that repository.

A web search engine is a multi-component system that collects data of documents (data sources) in a document repository, for instance web pages, builds a searchable index of the collected meta data, and presents an interface that lets the user search the index and shows the list of found documents (found documents in the following: first documents). Other data sources include local, remote and/or removable file systems, e.g. file systems of internal hard discs, file systems on servers in local networks or file systems on USB sticks, CD/DVD-ROMs, or any other removable media. Additional data sources are also all databases providing a query interface for third-party applications, e.g. SQL or others.

The goal of creating a computerized index of data sources is to optimize the speed and performance of finding relevant documents with such a search engine when a search query is requested.

Meta data of documents of a repository stored, linked and maintained in an index typically consist of a reference to the original document (for instance the URL (uniform resource locator)), the name of the document, as well as a cleaned up sequence of words (without formatting/markup) as they occur preferably in the text part of the document (in the following referred to as content). Further meta data types may comprise the title of the document; the description of the document; the keyword used in the document; the property of the document (for example author, editor, subject, headline, copyright, creator, producer, organization); references (for example URLs) to preferably downloadable resources like images, movies/videos, emails, sounds/audio data, downloads, webcams, feeds, documents or similar; and/or snippets. Snippets are strings containing textual parts of the document forming a representation of a document, for example a text extract, source code part, human readable addresses, quotes, scripts, recipes. This allows to search not only for single words but also for phrases consisting of multiple words in a row. The process of producing an index of a document is called indexing or indexing (ro)bot.

A particular text based part of the meta data of a document comprises meta data types like the content of the document, the title, the description of the document or objects, keywords, URL of document or objects, snippets or other text based data. This part of the meta data of a document is referred to as textual part of meta data in the following.

Without an index, the search engine during processing of a search request would scan every data source which would take a considerable amount of time and computing power. The trade off for the time saved during retrieval with an index is that additional storage capacity is required to store the index and that it takes a considerable amount of time to update the index.

The search results of searching first documents using the index by conventional search engines are typically presented with the name of the document, its URL, as well as the word sequence containing the search term. These sequences are often called the "Abstract". In addition, many web search engines allow to display the cached variant of the first document as well as show similar pages, their similarity is usually based on the way the document refers to other documents (link structure). Most web search engines follow the way google.com displays the search results.

During internet searches, the user often retrieves in a first attempt a list of first documents. In this list of first documents the user picks one first document which seems to be very interesting or most related to the search the user wanted to have results for. It is now very effective that the user uses this given first document in order to search the web for related, contextually similar second documents (so called "see also" search). The user would have then a high probability to find more most related results for his or her search.

In US 7,031,961 B2 a system is mentioned which is capable of providing Web site recommendations based on criteria provided by a user or by comparison to a single preferred document (e.g., Firefly, Excite's "more like this" feature). The Web site recommendations of the known systems are based only on either the structure of incoming and outgoing links or on a search for the words of the document's title, usually using the OR operator.

In document US 7,089,237 B2 a search and recommendation system is explained which deals specifically with providing contextual relevance for commerce activity in a network environment. The system employs the preferences and profiles of individual user and groups within a community of users, as well as information derived from categorically organized content pointers, to augment electronic commerce related searches, re-rank search results, and provide recommendations for commerce related objects based on an initial subject-matter queries and an interaction history of a user. The search and recommendation system operates in the context of a content pointer manager, which stores individual users' content pointers (some of which may be published or shared for group use) on a centralized content pointer database connected to a network. This system may fail with a good search result in case that a user conducts a search which is not related to the searches in the history of the user.

Document US 2006/0218138 A1 deals with implementing a method for improving search relevance using a grid structure and feature vectors. The disclosed system and method performs context based document searching. A grid of content tiles is constructed corresponding to a desired concept space. Each content tile is assigned to a content tag and is associated with a series of feature values. The feature values are trained to correspond to various regions of the content space. Documents are associated with one or more content tags based on a comparison of document feature values with content tile feature values. A search query is modified to include one or more content tags based on the terms in the search query and/or user preferences. The search query is then matched to the documents associated with content tags contained in the search query.

The state of the art document US 2004/0128277 A1 discloses a method and apparatus for organizing information in a computer filing system as well as a method for creating the internal representation used by the filing system in organizing piles and a method for searching documents in the filing system. In order to determine the internal non-normalized representation of a document, the document's vector is calculated. This is done by - among other things - calculating a normalized weight for a particular word of this document proportional to the ratio of the term frequency and the document frequency of the word. This is done for each non-stop word in the document. The disadvantage of this method is that a stop word list has to be created and maintained, which must be language and topic specific of the filing system.

The above explained and known methods do not solve the problem of retrieving documents in the repository coming from a first document that are contextually similar to this given first document.

Hence, the object of the present invention is to provide a method that extends a web search engine with the functionality to find documents in the index that are contextually similar to given document. The further object of the present invention is to provide an according system and computer-readable medium as well as an according computer program product.

**Disclosure of the Invention**

The above problem is solved with a method comprising the following steps:

a) selecting the associated reference meta data of said first document in said index,
b) determining the respective weight value of each element, preferably of each word, of said reference meta data,
c) determining a first threshold for the weight values of the elements of said reference meta data,
d) selecting the at least one element of said reference meta data, whose respective weight value is above said first threshold,
e) assigning the respective weight value of each selected meta data element to the at least one document associated with the respective selected meta data element and determining the total weight of each document of the repository by summing up said assigned weight values of the actual retrieval for each document,
f) normalizing the total weight value of each document of said repository,
g) selecting a predefined number of m documents (m is an integer greater or equal 1) with the highest normalized total weight values, preferably with a normalized total weight value above a second threshold, as said at least one second document.

The phrase "one document being contextually similar to another document" in this invention means that these documents have at least partially the same topic (containing the same keywords) or similar text but use a different wording or same text but a different ordering of the words. The phrases "semantically similar", "similar document" or "document related to another document" with regard to the invention shall be understood in the same way as "one document being contextually similar to another document".

This invention uses an artificial intelligence technology to search through a search engine index for documents that are similar to a given one. The inventive method is fast and leads to good results of the searches, that means contextually very similar documents, because it works comparable to the human brain. This "see also" technology, part of the search engine process, uses preferably a specific index structure described below to find documents with a high contextual similarity.

It is preferred that a textual part of meta data of the first document is used as reference meta data, wherein for the above method not all but only certain pre-defined meta data types of the textual part of meta data may be used for the retrieval of the contextually similar documents, for example the content of the document and the title of the document only.

In a further embodiment the, preferably non linear, weight of said meta data element determined in step b) is based on number and/or position, preferably the first position, of occurrences of said element in a textual part of said meta data of said document and/or number of occurrences of said element in said index and/or document repository (frequency) and/or element length and/or number of occurrences of said element in different occurrence groups, for example sites, directories, folders.

In an embodiment the weight value of the meta data element word is proportional to the number of characters in the word, preferable to a square root of this number, if the element is a word, because longer words are usually more relevant whereas shorter words are quite often trivial (so called stop words). Trivial words are usually very short in almost all languages.

In a further embodiment the weight value of the meta data element word is proportional to the relative position of the first occurrence of the word in the textual part of meta data of the first document, preferable to a square root of this relative position, because the earlier an element occurs (for example a word in the title or the introduction) the more relevant it is.

In a further embodiment the weight value is proportional to the number of occurrences of the element, preferably a word, in the meta data of the first document, preferably in the textual part thereof, preferable to a 4th root of this number, because the more often a word occurs in a reference document or its meta data, the more relevant it is.

In a further embodiment the weight value is inversely proportional to the number of occurrences of the element, preferably a word, in the whole index and/or the whole repository, preferable to a 4th root of this number, because the more often a word occurs in the index or in the repository, the less relevant or more trivial it is.

In a further embodiment the weight value is inversely proportional to the number of groups, for example sites, directories, and/or parents (that means any parents, for example domains of sites, directories of folders) and/or folders containing the element, preferably a word, preferable to a 4th root of this number, because the more groups and/or parents and/or folders contain the respective element the less relevant it is as it is probably not specific to a certain topic. A relevant word would ideally appear in only one or few groups.

It is preferred embodiment according to the invention that said first threshold is dynamically determined and calculated specific for the actual retrieval of contextually similar documents of the given first document dependent on weight values determined in step b), preferably by calculating a mean square of average weight values derived from the weight values of said meta data elements. The determination and usage of this first threshold selecting relevant elements of the reference meta data plays a key role in the search for contextually similar documents showing very good results at a high speed. With this threshold less relevant elements of the meta data of the first document are ignored (like stop words) and more relevant elements are used for the search. Further no stop word database have to be provided and maintained saving costs. Additionally the method works at the same time precisely for documents containing text in different languages, because the inventive method is not language specific whereas a stop word list is always language specific.

In another embodiment the index contains all meta data of the document of the repository including the order and the frequency of each meta data, in particular of words. The frequency is calculated as the total number of occurrences of a word in all textual parts of meta data contained in the index. The index contains all words in their original order and therefore every occurrence of a word.

It is possible to achieve a further enhancement in velocity of the search in the embodiment where said index of meta data is structured in the way that each meta data element is associated with all documents of the repository it belongs to and preferably forms a node, wherein preferably the meta data including the order and the frequency of each meta data element, preferably of words, with regard to each associated document.

It is preferred that said index is bidirectional and based on a network structure which is built on the principle of association. The network structure comprises several networks each stored in one file, wherein each file contains nodes and associations representing one kind of metadata of all documents of the repository. The networks stored in said files are cross-linked forming a so-called brain. Additionally, the network structure contains a so-called structure file comprising the hierarchical structure of the documents (pages) stored in the repository. This structure file does not contain the contents of the documents but their organisation. This network structure realizes that all meta data are automatically associated with all other meta data of the documents of the repository. In particular, one kind of meta data stored in one network containing nodes and associations. One node is unique and is associated with 0 to n children and 0 to p parents (n, p are integers) by means of associations. Nodes comprise for example words, strings (phrases), texts, URLs, pages, domains, directories, etc. One association consists of one pointer and one counter, wherein preferably the counter is context sensitive and depends on, for example, whether it refers to a child or a parent node. For example, the counter comprises the number of occurrences (that means, the frequency) and/or a weight multiplicator (that means, the weight) and/or encodes the run-length.

In a further embodiment of the inventive method the normalization in step f) above comprises division of said total weight associated to the respective document by a factor proportional to the number of elements of all documents of the repository or the number of elements of the respective document in those meta data types, preferably the number of words of all documents of the repository or the number of words of the respective document in those text based types of meta data, used for the retrieval. This method leads to fast, simple and precise results.

In an alternative embodiment of the inventive method the normalization in step f) above comprises the multiplication of said total weight by square root of the number of said selected words of the current first document which are also contained in the respective document, as well as the division of the square root of the maximum of the number of elements of the meta data of the first document, preferably words of the textual part of meta data of the first document, and the number of elements of the meta data of the respective document, preferably words of the textual part of meta data of the respective document, for which the normalized total weight is currently determined. This alternative detects advantageously similarities between small and large documents.

The best alternative comprises the normalization in step f) above using a division by the maximal possible weight of a document. The maximal possible weight of a document is calculated by the sum of weight of all elements of the meta data of the respective document, preferably of all words of the textual part of meta data, wherein the elements or the words are delimited to these meta data types which are used in the retrieval. This inventive method is useful in small or static databases.

In a further embodiment said index of said meta data of at least one document, preferably a web page document, is produced during processing of the at least one document by an indexing robot using at least one plugin. This processing is done in order to generate or extend the index and meta data of a web search engine with additional information or objects in an easy and effective way prior to "see also" searches as well as to extend the way search results are displayed to accommodate the user with this additional information. Objects are items returned by such plugin scanners, e.g. URLs of thumbnails or snippets of code/text. Such scanners therefore can be used for categorizing documents.

According to a preferred embodiment of the invention said at least one plugin comprises at least one predefined condition which is specific for the associated plugin, wherein said indexing robot executes the following steps:

i) loading said document,
ii) calling the first plugin,
iii) identifying whether said document conforms to said at least one predefined condition comprised by said first plugin,
iv) returning an information to said indexing robot about whether or not one or more object types and/or property types are contained in said document depending on whether or not said document conforms to said at least one pre-defined condition of said first plugin, and, if applicable,
v) repeat steps ii) to iv) with further plugins other than said first plugin.

This embodiment uses a number of techniques to disassemble documents, recognize objects or properties embedded, attached or linked to them, for example images, multimedia files, or references, and extract them. This method is used in the collection module of a web search engine. The extracted objects are fed into the search engine's index and stored together with the record for this document. The techniques (also known as "scanners") of the invention are implemented as plugins that have to conform to an arbitrary internal communication protocol. The protocol specifies a variety of methods, among them a method to check if the document conforms to a given condition and optional methods to return interesting objects (links, embedded or linked multimedia items or images, text, pieces of extracted code fragments (snippets) etc.) or interesting properties (author information, tags) for the document. Therein the predefined condition depends on the type of the scanner and the according object type or property type and may be varied for each scanner. For example, a scanner for retrieving a thumbnail gallery (object type: thumbnail gallery) may contain the predefined condition which is fulfilled if the document contains 4 embedded images linked to images, wherein the linked images are checked by their file extension (e.g. ".jpg").

A plugin (also called plug-in, addin, add-in, addon, or add-on) is a computer program that interacts with a host application (with regard to this invention: the indexing robot) to provide a certain, usually very specific function "on demand". A plugin enables third-party developers to create capabilities to extend an application, supports features yet unforeseen, reduces the size of an application and separates source code from an application. The use of plugins for scanning documents therefore makes the system highly flexible and extensible. Also, this approach is not limited to referenced files but to any kind of sub-structure that can be described by an algorithm. No special structures in the index have to be created.

The host application (indexing robot) provides services or functionalities which the plugins can use, for example XML/HTML parsing, RSS/RSD/RDF/Atom feed parsing, URL handling, conversation, normalization, data conversion. The indexing robot is independent of the plugins, making it possible for plugins to be added and updated dynamically without changes to the host application indexing robot. Conversely, the plugins of the inventive method are preferably dependent on these services provided by the indexing robot and do preferably not work by themselves. The services include a way for plugins to register themselves with the host application and a well-defined protocol by which data is exchanged with plugins.

With regard to the retrieval of the at least one second document the usage of above scanners during processing of a document for producing a computerized index leads to the advantage that the meta data contain the very different and flexible results of this scanning process and can therefore be used during search for the at least one second document which leads to more precise results in the retrieval of contextually similar second documents.

An additional advantage of having objects associated with document as meta data is that the information contained in the objects extracted by the plugin scanners may be used when displaying the search results. For example, in the display, a list of object types may be provided. In particular the object type list may be realized as buttons which allow constraining the search further to a certain object type. Additionally for snippet objects the web server may show a second preview or references contained in it. Hence, a further advantage of using plugin scanner for generation of objects is that in the result display the search engine application gives the user a clearly arranged overview over the displayed search results and their objects and properties.

In a further embodiment the following additional steps are executed between steps iv) and v) for the first plugin and, if applicable, also in the repeat of steps ii) to iv) for further plugins other than said first plugin:

iv.1) application of said first plugin to said document resulting in returned meta data of said document specific to said first plugin,
iv.2) storing said returned meta data in a meta data repository in order to produce said computerized index afterwards, wherein said returned meta data are stored associated with said processed document.

This embodiment further enhances the inventive method by using plugins to extract meta data about objects without actually downloading additional files, saving bandwidth. This meta data can be used to find contextually similar documents and it is possible to search within the URL of embedded, attached, or linked objects, description, or, in the case of snippets, their content by using the meta data collected by the indexing robot and the plugins.

In another embodiment the inventive method comprises after step i) that said indexing robot loads the one or more objects and/or properties (that means the data of said objects and/or properties) of said document and/or meta data of them according to the information returned by said first and, if applicable, by all further plugins about whether or not one or more corresponding object types and/or property types are contained in said document.

For example, the indexing robot (down)loads thumbnails, snapshots, descriptions (returned objects), or author information (returned property) by parsing the (down)loaded document on its own. Optionally, it downloads or extracts (e.g. snippets) the objects itself, if no suitable thumbnail is available. Finally it stores the document, URLs, objects, thumbnails, descriptions, and author information in a local meta data repository (meta data storage), which stores not only meta data and is used to build the index afterwards. Snippets stored in the meta data repository could also have URLs attached referring, e.g., to the reference of an HTML blockquote tag, etc. Contrary to other techniques this procedure saves a lot of bandwidth by not completely downloading all objects. It only relies on the code and the structure of the document itself, and external files, e.g., images, are only downloaded when no suitable thumbnails are available.

In a preferred embodiment an object type is an image, a thumbnail gallery, a reference, a snippet, a multimedia file, a URL, a link or text, or document specific meta data (like pdf meta data or (X)HTML meta data). But the invention is not restricted to the mentioned object types. As a property type anything that may be referenced and/or represented by a string or a URL can be used with regard to the present invention. Examples are: author, keywords tag, description of (X)HTML page, META tag, XHTML/XML tag, document specific meta data (like pdf meta data or (X)HTML meta data).

The inventive method may further be improved by the feature that if the predefined condition is fulfilled the returned meta data of said objects or properties are checked whether said document or a part of it (for example an object or a property) is a duplicate of another document or a part of another document (for example an object or a property) which is already stored in said data repository. Therein, not only the object(s) and property(properties) returned by one of the scanners may be used for the duplicate check but also the meta data of the object(s) and property(properties) of several or all scanners. The duplicate check comprises the check whether the chosen objects of the duplicate check are also used or contained by other documents. For example, usually a page going to be indexed is considered to be a duplicate of an already indexed page if the title, text and images are also used or contained by other pages. This means, that the raw source, e.g. the (X)HTML code of the page, is not used for duplicate check but its objects title, text and image. Hence, the indexing robot is, by using the plugins, able to identify duplicates immediately and so does not feed them to the index. This keeps the index smaller and far less cluttered.

In a further preferred embodiment the information of all plugins about whether or not one or more object types and/or property types are contained in said document is stored in the index associated with said data source, preferably in a bitmap. Hence, it is possible for the search engine application described below to use bitmaps to limit search results to documents matching a specific set of scanners.

It is further advantageous that said retrieved at least one second document is displayed to the user, for example in a list with a decreasing order of said second documents with regard to their normalized weight. In this embodiment the documents which are most related to the first document are displayed first.

In a further embodiment said index uses associations comprising a 32 bit pointer and a 16 bit counter representing said weight and/or said frequency.

In a further embodiment the nodes of the index use a key, which is unique for each operation, in order to decide if said assigned weight value weight should be set or added in step e). For example, each node of the index network comprises a stimulation/weight/relevance property (e.g. a floating point variable) and a key property (e.g. unsigned 32-bit integer property). As search operations are executed one after another and as each search operation uses a unique key, the stimulation/total weight/relevance property of the actual node is either

■ set (that means assigned to the documents associated with the respective node) and the key property is set to the current search key, if the node's key is not identical to the current search key,

or

■ added to the weight value of the assigned documents of the node if the node's key is already identical to the current search key.

Therefore it is not necessary to reset the properties of all nodes of the network(s) after each search operation which would cause a noticeable delay/timeout otherwise.

In a further embodiment said total weight of said index is not resetted after finishing an operation, that means, each retrieval. This results in a higher performance ("no blackout").

It is advantageous that the operation starts when the user clicked a "see also" button on the screen.

The above-mentioned problem is also solved by a computer-readable medium comprising the above explained method as well as a computer program product comprising program code means for performing the above mentioned method. This inventive computer-readable medium or computer program product provides the method with the advantages described above. Preferably, the computer program product is stored on a computer readable data carrier.

In an other wording the above-mentioned problem is also solved by a computer-readable medium comprising code means adapted to perform all the steps of the above mentioned methods. Further the problem is solved by a computer-readable medium having recorded thereon a computer-readable program comprising code means adapted to perform all the steps of the methods described above.

Additionally, the above-mentioned problem is solved by a system that facilitates retrieving at least one second document contained in a document repository that is contextually similar to a given first document of said repository, wherein said repository is associated with an index of all meta data of all documents of the repository, comprising:

A) a module that selects the associated reference meta data of said first document in said index,

B) a module that determines the respective weight value of each element, preferably of each word, of said reference meta data,

C) a module that determines a first threshold for the weight values of the elements of said reference meta data,

D) a module that selects the at least one element of said reference meta data, whose respective weight value is above said first threshold,

E) a module that assigns the respective weight value of each selected meta data element to the at least one document associated with the respective selected meta data element and determines the total weight of each document of the repository by summing up said assigned weight values for each document,

F) a module that normalizes the total weight value of each document of said repository,

G) a module that selects a predefined number of m documents (m is an integer greater or equal 1) with the highest normalized total weight values, preferably with a normalized total weight value above a second threshold, as said at least one second document.

As explained above with regard to the inventive method, the inventive system is capable to find good results of similar documents to a given first document in a very effective way.

The further embodiments of the system as explained below have the same advantages as the according methods described above.

In an embodiment the module B) of the inventive system comprises that the prefereably non linear weight of said meta data element is based on number and/or position, preferably the first position, of occurrences of said element in said meta data of said document and/or number of occurrences of said element in said index and/or document repository and/or element length and/or number of occurrences of said element in different occurrence groups, for example sites, directories, folders.

In a further embodiment of the inventive system module C) dynamically determines said first threshold is and calculates it specific for the actual retrieval dependent on said weight values of each meta data element, preferably by calculating a mean square of average weight values derived from the weight values of said meta data elements.

Preferably, the system also comprises an indexing robot module using at least one plugin.

In an embodiment of the inventive system the normalization in module F) above comprises division of said total weight associated to the respective document by a factor proportional to the number of all elements of the respective document in those meta data types, preferably the number of words of the respective document in those text based types of meta data, used for the retrieval.

In a further embodiment of the inventive system the indexing robot module comprises the following further modules, wherein the at least one plugin comprises at least one predefined condition which is specific for the associated plugin:

I) module that loads said document,

II) module that calls the first plugin,

III) module that identifies whether said document conforms to said at least one predefined condition comprised by said first plugin,

IV) module that returns an information to said indexing robot about whether or not one or more object types and/or property types are contained in said document depending on whether or not said document conforms to said at least one predefined condition of said first plugin, and, if applicable,

V) further modules analogous to modules II) to IV) for further plugins other than said first plugin.

The above system is further improved by the following additional modules:

IV.1) module that applies of said first plugin to said document resulting in returned meta data of said document specific to said first plugin,

IV.2) module that stores said returned meta data in a meta data repository in order to produce said computerized index afterwards, wherein said returned meta data are stored associated with said processed document.

It is also preferred, that the system further comprises a display, where said retrieved at least one second document is displayed to the user, for example in a list with a decreasing order of said second documents with regard to their normalized weight. The system with this display makes it easy to the user to view the search results.

In another embodiment the system comprises an index which network structure contains associations comprising a 32 bit pointer and a 16 bit counter representing said weight and/or said frequency. The main advantages of such system are less memory usage (only 6 bytes for each association) and higher performance as less memory usage improves the overall efficiency of CPU caches. Therefore the system is able to handle more data faster.

It is further preferred that the nodes of the index use a key, which is unique for each operation, in order to decide if said assigned weight value in step e) should be set or added with regard to the respective documents.

In a most preferred system the display shows a "see also" button after said given first document, wherein the retrieval of said at least one second document starts when the user clicked said "see also" button.

The invention will now be described by way of an example and with reference to the accompanying drawings. Thereby, further features and advantages are presented that are part of the present invention independently of the dependency of the claims.

Figure 1    shows a block diagram of a data search using the inventive method,

Figure 2    shows a block diagram of the inventive method in detail and

Figure 3    shows a block diagram of an indexing robot routine using a further embodiment of the inventive method for processing a document.

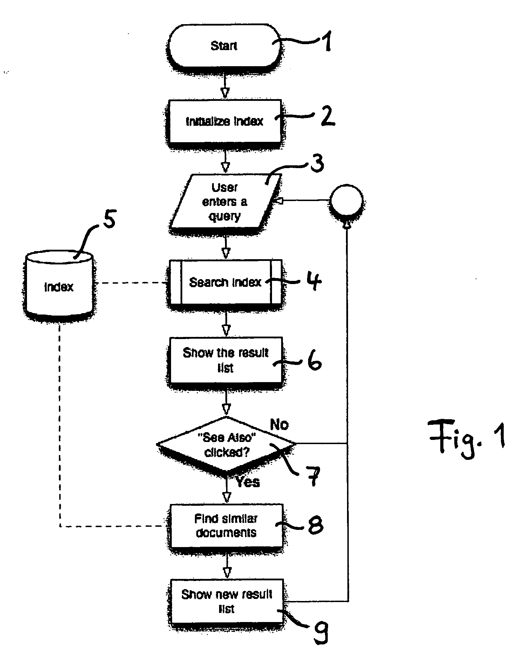

The diagram in Figure 1 shows that after the start 1 of the search engine in step 2 the index is initialized. In the initializing step the index, consisting of several networks, is loaded into memory and all networks are combined to a huge meta network ("brain"). Then, in step 3, the user enters a query in order to find information, for instance about a historic question, a commercially interesting object or a technical question. After that, the index 5 is searched in step 4 for the demanded information according to conventional search methods. The index 5 contains meta data of each document of the repository, for instance words, the URL of each document, pictures etc.. The words of the index are, for example, retrieved by creating a text-only variant of a document and feeding the text-only variant into the index data repository 5. After finishing the search the search results are shown in a list (step 6) of first documents.

When the user wants to know more or similar documents of one result shown in the list of step 6 (the so called given first document) the user clicks the "see also" button (step 7) which is displayed next to the given first document. A "see also" button is situated next to each search result in the list. If the "see also" button is not clicked ("No" branch), the procedure goes back to step 3, where the user can enter another query.

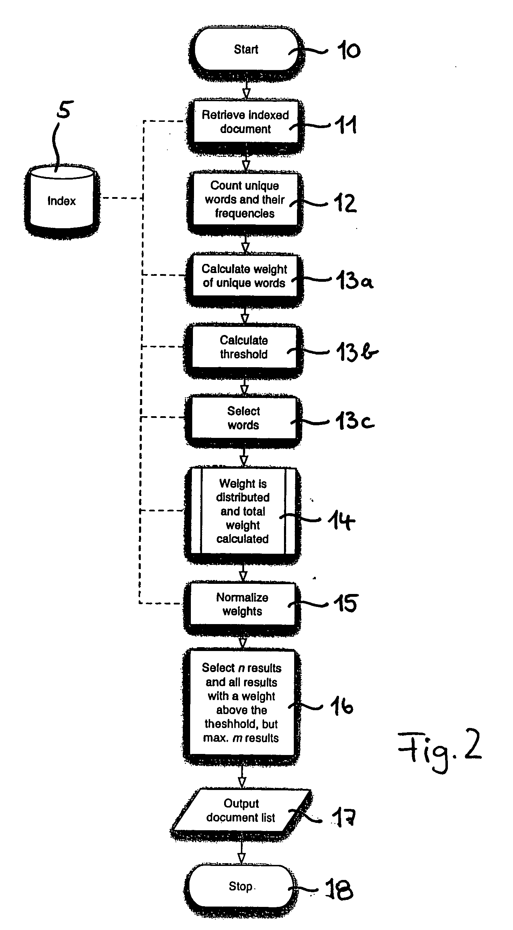

If the "see also" button of a first document (reference document) is clicked ("Yes" branch) the inventive method (operation) is started, wherein in step 8 similar documents are searched using the index 5. The operation is explained in detail by means of Figure 2 below.

After finishing the search for contextually similar documents the resulting at least one second document(s) is (are) shown in a new list (step 9), which preferably begins with the second document that is most similar to the given first document. After that, the user can enter a new query leading back to step 3 or (not displayed in Figure 1) finish searching.

Figure 2 shows the inventive method (operation) of step 8 of Figure 1 in more detail. After clicking the "see also" link next to one search result (first document) the search engine hands over this document (reference document) to the "see also" technology using a pre-defined API (application programming interface) which then begins with finding similar documents (step 10). In the next step 11 the method retrieves all unique words (reference words) of the textual part of the meta data of the given first document which are assigned to the first document and are in the focus when searching similar documents. Therein, for the selection of the reference meta data all meta data types of the textual part may but have not to be used but only several predefined of them may be chosen. For example, in step 11 the words of the meta data type title and the meta data type content assigned with the first document are selected. These words are contained in the index 5 which is associated with each document of the repository.

Then, in the next step 12 of the method, the reference words and their frequencies are counted and, after that in step 13a, the weight of each unique word is calculated using the index 5. In a preferred embodiment, in the case the index comprises above node structure, the frequency of each node is multiplied by the frequency of the superior node and so on leading to the total frequency of each word (lowermost nodes) in the repository or index (highest node).

The weight of each unique reference word of the meta data of the first document is calculated in step 13a using at least one of the following proportionalities:

Weight of the word W1~ (the number of characters of the word)^0.5,

Weight of the word W2 - 1.5 - (relative position of the first occurrence of the word in the textual part of meta data of the first document)^0.5,

Weight of the word W3 - (number of occurrences of the word in the textual part

of meta data of the first document)^0.25,

Weight of the word W4 - 1/(number of occurrences of the word in the index and/or document repository)^0.25,

Weight of the word W5 - 1/(number of groups and/or parents and/or folders containing the word)^0.25

Preferably, at least one of weight values W1 to W5 or all weight values W1 to W5 are determined and multiplied for each word of the meta data of the first document yield the weight value of the respective word Wword of the reference meta data. That means, preferably the weight value of the respective word Wword of the meta data is calculated as the following product:

$$Wword \sim W1 \times W2 \times W3 \times W4 \times W5.$$

Then in step 13b, for the meta data of the first document, a dynamic threshold T1 is calculated which is specific for the respective first document. At first, a minimum weight value Wmin is determined, wherein this value is the minimal value of the weight of all unique reference words of the reference meta data.

Then, an arithmetic average weight value Waverage is determined, wherein this value is the arithmetic mean value of the weight values Wword of all unique words of the reference meta data. Additionally, a median weight value Wmedian is determined by sorting all weight values Wword of the meta data of the first document by their value in a list and choosing the weight value in the middle of this list. From these average weight values of the meta data of the first document the dynamic threshold is determined using the following formula:

$$T1 = ( Wmin^2 + Waverage^2 + Wmedian^2) / 3$$

Above formula calculates the mean square of the above weight values Wmin, Waverage and Wmedian and therefore prioritizes larger weight values Wword of the reference words. This is necessary because only words with higher significance with regard to the content of the first document shall be the basis of the search for contextually similar documents. With this method it is not necessary to provide and maintain a list of stop words as explained above.

In the next step 13c only the unique words of the reference meta data are selected which are assigned with higher weight values Wword than the above dynamic threshold T1. These words are named in the following "selected words" of the meta data of the first document.

In step 14 the weight Wword of each selected word of the index 5 is distributed or assigned to each document which is associated with the respective selected word.

In a preferred embodiment each node in the index uses an unique key to decide whether the weight Wword to be distributed or assigned should be set or added for the respective document. The key can be an integer or a pointer and is unique for each operation (one operation means one retrieval of at least one second document). This is necessary because the weight is part of a union used for several operations. An example of a procedure of changing the weight depending on the value of the unique key is described above.

After distributing the weight values of the selected words to the associated documents the total weight Wtotal of each document ("stimulation") of the repository is calculated as the sum of all weight values Wword assigned or distributed to the respective document, wherein in the embodiment of the previous paragraph the calculated weight value is equal to the actual weight value of the respective document for each unique key. The documents which are assigned to a key which differs from the unique key of the actual operation have the total weight value 0.

Finally, in step 15, the search engine process normalizes the total weight values Wtotal of each document in a first alternative by a division of said total weight (Wtotal) associated to the respective document by a factor proportional to the number of words of the respective document in those text based types of meta data used for the retrieval ("density of signals") resulting in a normalized total weight value Wnormal1 for each document of the repository. The first alternative works fast, simple and precise but has some problems in finding similarities between small and large documents.

Alternatively, in step 15 the search engine process normalizes the total weight values Wtotal of each document based on the following formula:

$$Wnormal2 = Wtotal \times nselected^{0.5} / max(nwords(first\ document),\ nwords(respective\ document))^{0.5},$$

wherein

nselected is the number of selected words ("stimulated words") of the current first document, max is the maximum of the arguments in parenthesis, namely nwords(first document) is the number of words in the textual part of meta data of the respective first document and nwords(respective document) is the number of words in the textual part of meta data of the respective document for which the normalized total weight is currently determined.

The second alternative detects similarities between small and large documents with the disadvantage, that documents being much larger than the first document are quite often only because of this fact part of the results.

In a third alternative the search engine process normalizes the total weight values Wtotal of each document based on the following formula in step 15:

$$Wnormal3 = Wtotal / max(weight),$$

wherein max(weight) is the maximal possible weight of the respective document.

This third alternative is preferably used for small or static databases because the max(weight) value may be provided and calculated in advance for each document of the repository.

Then, in step 16, the process selects documents as a result with a normalized weight Wnormal1 or Wnormal2 or Wnormal3 above a threshold T2, but a maximum of m (m is an integer greater or equal 1, for example m = 10) results beginning with the result with the highest normalized total weight Wnormal1 or Wnormal2 or Wnormal3. The threshold T2 depends on the meta data to compare. For instance a threshold T2 = 0.2 to 0.4 returns usually very similar documents (T2 = 1.0 almost identical documents, T2 = 0.0 document with no similarity).

Then, in step 17, the selected documents are displayed in an output document list to the user. The listing may contain the document name, the document's URL, the document's file size, the document's modification time stamp, the similarity between the original document and the related document, and, if applicable further information about each listed document, for example objects. Therein the similarity, that means the normalized weight, of the related documents which is a floating point value between 0.0 and 1.0 and may be expressed as a distinct number of graphical symbols. For example, the similarity may be expressed using stars analogous to hotel rating. E.g., one star represents lowest similarity (similarity $\leq$ 0.1), two stars represent low similarity (0.1 < similarity $\leq$ 0.25), three stars represent medium similarity (0.25 < similarity $\leq$ 0.5), four stars represent higher similarity (0.5 < similarity $\leq$ 0.75) and five stars represent highest similarity (0.75 < similarity $\leq$ 1.0). Then, the procedure is stopped (step 18).

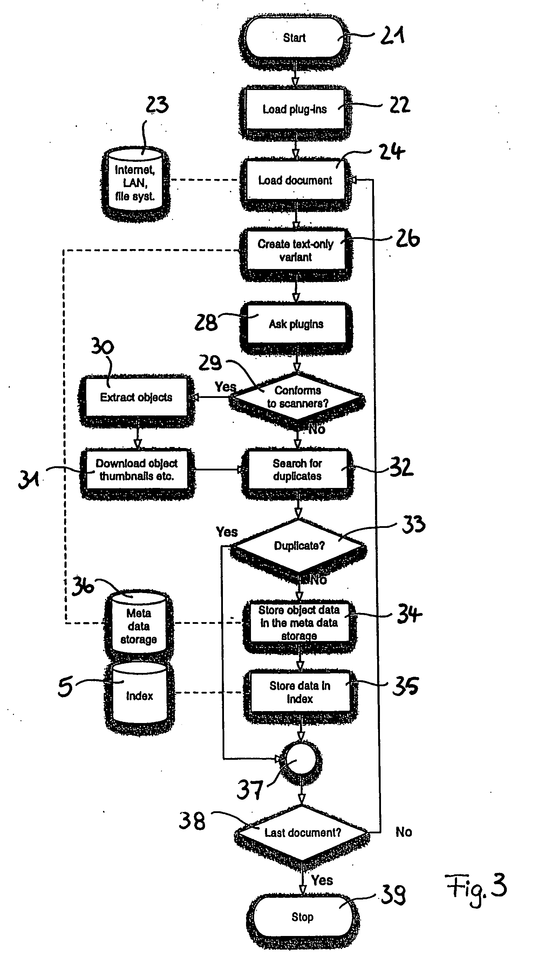

Figure 3 shows part of a further embodiment of the inventive method wherein prior to the search described above one document or many documents are processed for producing a computerized index using at least one plugin.

After the start of the method in step 21 and loading of the plugins in step 22 the indexing robot routine shown in figure 3 begins to index a number of linked documents or data sources (feeding the documents into the index 5), for example a web site (in the following: page or document), which is provided by the internet or a local area network (LAN) or a file system 23. It loads in step 24 the first page, for example an HTML page (say, a DEVONtechnologies product page containing many images), and extracts in step 26 the pure text in order to store the text-only variant of the page in a meta data storage 36. In step 28, it calls one scanner plugin after the other and provides it via the internal plugin API (application programming interface) with the source code of the page as well as with the extracted text and the URL.

The first plugin (in this case, for example, a scanner plugin that scans for thumbnail galleries) examines the source code and the text, or loads the document itself using the provided URL. Then, it applies in step 29 the first method to the data of the data source, the one that checks whether it matches a defined condition or not. For example, the first scanner gets in the first step all embedded images of the data source (represented by IMG tags and their SRC attribute, wherein an IMG tag embeds an image into (X)HTML pages and the SRC attribute of the IMG tag specifies the relative or absolute URL of the image). In the second step the plugin gets the links enclosing those images (represented by A tags and their HREF attribute, wherein an A tag creates a hyperlink in an (X)HTML page to the resource specified by the relative or absolute URL of the HREF attribute). Then, the scanner checks each link, if the link points to an image by comparing the file extensions to known image file extensions (e.g. ".jpg"). After that, in the next step the plugin checks, whether at least 4 embedded images are linked to images. If at least 4 embedded images are linked to images then the condition "thumbnail gallery" is fulfilled.

If the document matches the condition (in the above example, at least 4 embedded images are linked to images), i.e. it contains all forms of small images that are linked or otherwise connected to larger images (the definition of a thumbnail gallery, requires multiple filters), positive feedback information is given back to the indexing robot. That means, the feedback containing the information that the document contains at least one thumbnail gallery is returned to the indexing robot. Therein, the positive feedback information is a Boolean value returned by the scanner to the indexing robot. If the value is true (i.e. value = 1) the scanner accepts the page.

The indexing robot then calls the second method of the first plugin or a second plugin that extracts (from the document source code) in step 30 or retrieves (from the Internet) in step 31 the found objects from the page and hands them together with their URLs to the indexing robot process. The robot repeats this process with every scanner plugin and, when finished, searches the code of the document for usable thumbnails or descriptions for the found objects and downloads them. If no thumbnail is available, it can also download the object, e.g., the image, itself.

When all scanner plugins have been run on the document, the indexing robot identifies possible duplicates of the document in the search engine index in step 32 preferably using another plugin. For this it not only compares in step 33 the plain text representation of the document but also its objects. If the document has no already filed duplicate, the indexing robot finally stores in steps 34 and 35 the document as well as the information from the scanners as object data and/or meta data in the meta data storage (meta data repository) 36 and the index 7. It also sets the corresponding bits in the scanner bitmap that tells the search engine process later which objects are contained by this page. If the document is a duplicate already contained in the index, the page as well as the objects or properties are not stored in the index 7 or the metadata storage 16 leading the process to point 37. The above described routine containing steps 24 to 37 is repeated with each page of the number of linked data sources, if the analysis in step 38 arises that the last document is not reached. If the last page is reached, the routine of the indexing robot is stopped (step 39).

After executing above mentioned routine for each document of the repository the meta data index contains objects which can be additionally used during retrieval of a contextually similar document.

The invention is able to not only use this method for the meta data word contained in the document text of the repository but also for all meta data words associated with it. Therefore, it is possible to run a "see also" search based on the pure text of the document, its title, keywords, description, URL and/or their objects as well as all other meta data that was added to the index.

Another embodiment of the inventive method may enrich conventional search results with documents that are semantically related to these search results.

**Claims**

1. Method for retrieving at least one second document contained in a document repository that is contextually similar to a given first document of said repository, wherein said repository is associated with an index of all meta data of all documents of the repository, wherein the method comprises the following steps:

   a) selecting the associated reference meta data of said first document in said index,
   b) determining the respective weight value (Wword) of each element, preferably of each word, of said reference meta data,
   c) determining a first threshold (T1) for the weight values (Wword) of the elements of said reference meta data,
   d) selecting the at least one element of said reference meta data, whose respective weight value (Wword) is above said first threshold (T1),
   e) assigning the respective weight value (Wword) of each selected meta data element to the at least one document associated with the respective selected meta data element and determining the total weight (Wtotal) of each document of the repository by summing up said assigned weight values (Wword) for each document,
   f) normalizing the total weight value (Wtotal) of each document of said repository,
   g) selecting a predefined number of m documents (m is an integer greater or equal 1) with the highest normalized total weight values (Wnormal1, Wnormal2, Wnormal3), preferably with a normalized total weight value above a second threshold (T2), as said at least one second document.

2. Method according to claim 1, **characterized in that** said preferably non linear weight of said meta data element is based on number and/or position, preferably the first position, of occurrences of said element in said meta data of said document and/or number of occurrences of said element in said index and/or document repository and/or element length and/or number of occurrences of said element in different occurrence groups, for example sites, directories, folders.

3. Method according to any of the preceding claims, **characterized in that** said first threshold (T1) is dynamically determined and calculated specific for the actual retrieval dependent on said weight values (Wword) of each meta data element determined in step b), preferably by calculating a mean square of average weight values (Wmin, Waverage, Wmedian) derived from the weight values (Wword) of said meta data elements.

4. Method according to any of the preceding claims, **characterized in that** said index of meta data is structured in the way that each meta data element is associated with all documents of the repository it belongs to and preferably forms a node, wherein preferably the meta data including the order and the frequency of each meta data element, preferably of words, with regard to each associated document.

5. Method according to any of the preceding claims, **characterized in that** said index is bidirectional and based on a network structure containing nodes and associations.

6. Method according to any of the preceding claims, **characterized in that** said normalization in step f) above comprises division of said total weight (Wtotal) associated to the respective document by a factor proportional to the number of all elements of the respective document in those meta data types, preferably the number of words of the respective document in those text based types of meta data, used for the retrieval.

7. Method according to any of the preceding claims, **characterized in that** said index of said meta data of at least one document is produced by an indexing robot using at least one plugin.

8. Method according to claim 7, **characterized in that** each of said at least one plugin comprises at least one predefined condition which is specific for the associated plugin, wherein said indexing robot executes the following steps:

   i) loading said document,
   ii) calling the first plugin,
   iii) identifying whether said document conforms to said at least one predefined condition comprised by said first plugin,
   iv) returning an information to said indexing robot about whether or not one or more object types and/or property types are contained in said document depending on whether or not said document conforms to said at least one pre-defined condition of said first plugin, and, if applicable,
   v) repeat steps ii) to iv) with further plugins other than said first plugin.

**9.** Method according to claim 8, **characterized in that** the following additional steps are executed between steps iv) and v) for the first plugin and, if applicable, also in the repeat of steps ii) to iv) for further plugins other than said first plugin:

> iv.1) application of said first plugin to said document resulting in returned meta data of said document specific to said first plugin,
> iv.2) storing said returned meta data in a meta data repository in order to produce said computerized index afterwards, wherein said returned meta data are stored associated with said processed document.

**10.** Method according to any of the preceding claims, **characterized in that** said retrieved at least one second document is displayed to the user, for example in a list with a decreasing order of said at least one second document with regard to their normalized weight value (Wnormal1, Wnormal2, Wnormal3).

**11.** Method according to any of the preceding claims, **characterized in that** said network structure contains associations to each document of the repository comprising a 32 bit pointer and a 16 bit counter.

**12.** Method according to any of the preceding claims, **characterized in that** the nodes of the index use a key, which is unique for each operation, in order to decide if said assigned weight value (Wword) of a document should be set or added.

**13.** Method according to any of the preceding claims, **characterized in that** said total weight value (Wtotal) of each document is not resetted after finishing an operation.

**14.** A computer-readable medium comprising the method according to any of the preceding claims.

**15.** A computer program product comprising program code means for performing the method of any of the claims 1 to 13.

**16.** Computer program product comprising program code means according to claim 15 stored on a computer readable data carrier.

**17.** A system that facilitates retrieving at least one second document contained in a document repository that is contextually similar to a given first document of said repository, wherein said repository is associated with an index of all meta data of all documents of the repository, comprising modules for execution of the steps of any of the methods of claims 1 to 13.

Fig. 1

Fig.2

**Fig. 3**

Europäisches
Patentamt

European
Patent Office

Office européen
des brevets

**EUROPEAN SEARCH REPORT**

Application Number

EP 09 00 0986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/005493 A (LLESIANT; SCHERR MITCHELL H [US]; MORTON JOHN ELDON [US]) 10 January 2008 (2008-01-10) * abstract * * page 1, line 4 - page 1, line 19 * * page 1, line 34 - page 2, line 1 * * page 2, line 19 - page 4, line 35 * * page 5, line 7 - page 7, line 16 * * page 7, line 29 - page 8, line 16 * * page 9, line 8 - page 9, line 22 * | 1-17 | INV. G06F17/30 |
| Y | US 2005/154761 A1 (LEE CHRIS G [US] ET AL LEE CHRIS GUO [US] ET AL) 14 July 2005 (2005-07-14) * abstract * * paragraph [0002] * * paragraph [0010] - paragraph [0013] * * paragraph [0023] * * paragraph [0036] - paragraph [0040] * * paragraph [0054] - paragraph [0057] * * paragraph [0080] - paragraph [0085] * * paragraph [0094] * | 1-17 | |
| Y | WO 02/05130 A (CASMIR LTD [GB]; FERNLEY HELEN ELAINE PENELOPE [GB]; BERNEY THOMAS BRE) 17 January 2002 (2002-01-17) * abstract * * page 1, line 3 - page 3, line 23 * * page 4, line 14 - page 4, line 22 * * page 8, line 21 - page 10, line 12 * * page 11, line 3 - page 12, line 8 * * page 13, line 17 - page 14, line 8 * * page 17, line 12 - page 19, line 20 * * page 20, line 5 - page 20, line 23 * | 1-17 | TECHNICAL FIELDS SEARCHED (IPC) G06F |
| A | US 2007/283425 A1 (TURE MARK [US] ET AL) 6 December 2007 (2007-12-06) * paragraph [0015] * * paragraph [0085] * | | |

The present search report has been drawn up for all claims

| Place of search | Date of completion of the search | Examiner |
|---|---|---|
| The Hague | 9 June 2009 | Boyadzhiev, Yavor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 0986

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2009

| Patent document cited in search report | | | Publication date | Patent family member(s) | | Publication date |
|---|---|---|---|---|---|---|
| WO 2008005493 | A | | 10-01-2008 | NONE | | |
| US 2005154761 | A1 | | 14-07-2005 | US | 2007234140 A1 | 04-10-2007 |
| WO 0205130 | A | | 17-01-2002 | AU | 6931801 A | 21-01-2002 |
| | | | | US | 2002174101 A1 | 21-11-2002 |
| US 2007283425 | A1 | | 06-12-2007 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7031961 B2
- US 7089237 B2
- US 20060218138 A1
- US 20040128277 A1